# EUROPÄISCHE PATENTANMELDUNG

(11) **EP 0 525 216 A1**
(43) Veröffentlichungstag der Anmeldung: **03.02.1993**
(21) Anmeldenummer: 91111495.7
(22) Anmeldetag: 10.07.1991
(51) Int. Cl.: H02G 3/06, H02G 15/013, H02G 3/22

(54) **Abgedichtete Kabeldurchführung**

(71) Anmelder: HOTTINGER BALDWIN MESSTECHNIK GMBH, D-64201 Darmstadt (DE)
(72) Erfinder: Schlachter, Werner, Dipl.-Ing., W-6100 Darmstadt (DE); Bäumel, Helmut, W-6100 Darmstadt (DE)
(74) Vertreter: Brandt, Ernst-Ulrich, Dipl.-Phys., Dipl.-Ing.

(57) **Zusammenfassung**

Die Erfindung schlägt eine auch unter Druck dichte Kabeldurchführung durch eine Wandung (1) vor. Hierzu ist vorgesehen, daß die Kunststoffummantelung (3) des Kabels (2) von einer Metallhülse (5) umgeben ist, die fest mit der Ummantelung (3) verbunden und im Bereich der Ausnehmung der Wandung (1) angeordnet ist, wobei eine metallische Abdichtung zwischen der Wandung (1) und der Metallhülse (5) durch einen Schneidring (10) erfolgt.

## Beschreibung

Die Erfindung betrifft eine abgedichtete Kabeldurchführung durch eine in einer Wandung vorgesehene Ausnehmung für ein Kabel mit einer Kunststoffummantelung.

Derartige Kabeldurchführungen werden auf sehr vielen Gebieten der Technik eingesetzt und dienen insbesondere der Kabelabdichtung in Gehäusen, insbesondere gegen Wasser. Bei bekannten Kabeldurchführungen ist eine Stopfbuchse oder eine Umspritzung mit einer Kunststoffmasse vorgesehen. Ferner sind sogenannte PG-Verschraubungen bekannt, die ein Einklemmen des Kabels bewirken und damit eine gewisse Dichtwirkung erzielen.

Allen bekannten Kabeldurchführungen ist gemeinsam, daß sie beim Auftreten von Druckdifferenzen zwischen den beiden Seiten der Wandung keine hermetische Abdichtung mehr gewährleisten. Es ist daher die Aufgabe der Erfindung, eine gattungsgemäße Kabeldurchführung zu schaffen, die sich durch eine besonders hohe Dichtwirkung auszeichnet und auch bei Druckbeaufschlagung sicher abdichtet.

Diese Aufgabe wird erfindungsgemäß durch eine die Ummantelung umgebende Metallhülse, die fest mit der Ummantelung verbunden und im Bereich der Ausnehmung angeordnet ist, und durch einen radial zwischen der Metallhülse und der Wandung angeordneten Schneidring gelöst. Die besonders hohe Dichtwirkung wird somit durch eine metallische Abdichtung erreicht.

Diese metallische Abdichtung läßt sich auf besonders einfache Weise erreichen, wenn die Abdichtkraft durch einen konischen Abschnitt der Ausnehmung bewirkt wird. Die Verbindung zwischen Metallhülse und Ummantelung läßt sich auf besonders einfache und kostengünstige Weise durch eine Quetschverbindung realisieren.

Eine weitere Verbesserung der Dichtwirkung kann erreicht werden, wenn die Ummantelung in einem innerhalb der Hülse liegenden Teilbereich entfernt ist und dieser Teilbereich mit einer feuchtigkeitsbeständigen Masse vergossen wird. Diese zusätzliche Abdichtmaßnahme schließt das Eindringen von Feuchtigkeit über die Kontaktfläche zwischen Ummantelung und Metallhülse aus. In gleichem Sinne wirkt auch eine Stopfbuchsendichtung" die auf der Seite, auf welcher die Feuchtigkeit oder das Wasser auftritt, dem Schneidring vorgelagert ist.

Eine weitere Verbesserung der Dichtigkeit läßt sich dadurch erreichen, daß die Kabellitzen im vergossenen Bereich über einen Teilabschnitt abisoliert sind, innerhalb dessen sie verlötet werden. Dadurch wird ein Kriechen der Feuchtigkeit innerhalb der Litzen verhindert.

Zur Erzeugung der Dichtkraft zwischen dem Schneidring und der Metallhülse eignet sich besonders eine Spannmutter, die das Kabel radial umgibt. Innerhalb der Spannmutter kann eine Zugentlastungsvorrichtung angeordnet werden. Diese kann beispielsweise als PG-Verschraubung ausgebildet sein, wozu die Spannmutter ein Innengewinde aufweisen sollte.

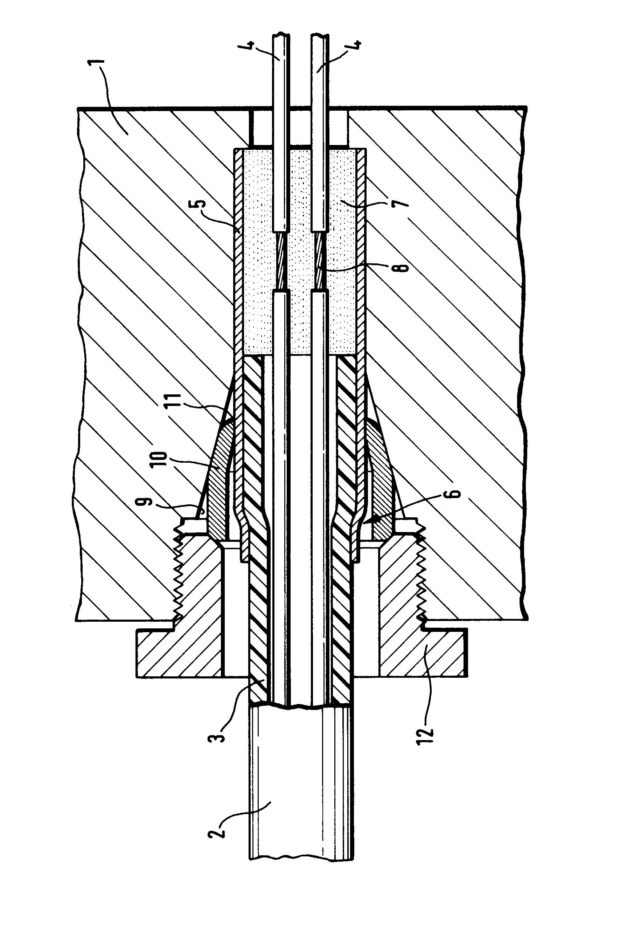

Weitere vorteilhafte Merkmale sowie der Aufbau der Erfindung ergeben sich aus der nachstehenden Beschreibung eines Ausführungsbeispiels anhand der Zeichnung. Die einzige Figur zeigt eine Wandung 1, die beispielsweise Teil eines Gehäuses sein kann. Diese Wandung weist eine mehrfach gestufte Durchgangsbohrung auf, die der Durchführung des Kabels 2 dient. Das Kabel 2 weist eine Kunststoffummantelung 3 auf, welche mehrere Adern 4 aufnimmt. Das Kabel 2 ist auf einer bestimmten axialen Erstreckung von einer Metallhülse 5 umgeben, mit welcher es mittels einer Quetschverbindung 6 verbunden ist, das von der Seite, auf welcher die Feuchtigkeit bzw. Flüssigkeit auftritt, abgewandte Ende der Metallhülse 5 liegt an einem Absatz der Durchgangsbohrung an. Innerhalb dieses Endbereiches ist die Ummantelung 2 entfernt und die Metallhülse 5 wurde mit einer feuchtigkeitsbeständigen Masse 7 vergossen. Zur besseren Haftung sowie zur Steigerung der Dichtigkeit ist der zu vergießende Bereich der Metallhülse 5 beispielsweise durch Anätzung aufgerauht. Zuvor wurden noch die Adern 4 in einem innerhalb der Vergußmasse 7 liegenden Teilabschnitt abisoliert und die freigelegten Litzen 8 wurden verlötet, um ein Kriechen von Feuchtigkeit durch die Litzen zu vermeiden.

Die Durchgangsbohrung weist einen sich zur Gehäuseinnnenseite hin konisch verjüngenden Abschnitt 9 auf, an welchen sich die ebenfalls konische Außenfläche eines an sich bekannten Schneidringes 10 anlegt. Der Schneidring 10 wird durch die ein Außengewinde aufweisende Spannmutter 12, welche in die Wandung einschraubbar ist, axial belastet, so daß die Schneidkante 11 dichtend in die Oberfläche der Metallhülse 5 eindringt. Eine weitere metallische Abdichtung wird durch die pressende Anlage des konischen Bereiches der Durchgangsbohrung und des Schneidringes erzeugt.

In dem ringförmigen Bereich zwischen Spannmutter und Kabel 2 kann zur weiteren Steigerung der Dichtigkeit eine Stopfbuchse angeordnet werden. Alternativ oder zusätzlich kann in diesem Bereich auch eine Zugentlastung vorgesehen sein. Hierzu ist es besonders günstig, wenn die Spannmutter 12 auch noch ein Innengewinde aufweist, in welche beispielsweise an sich bekannte PG-Verschraubung einschraubbar ist, welche die Zugentlastungfunktion wahrnimmt.

## Patentansprüche

1. Abgedichtete Kabeldurchführung durch eine in einer Wandung (1) vorgesehene Ausnehmung für ein Kabel (2) mit einer Kunststoffummantelung (3), gekennzeichnet durch eine die Ummantelung (3) umgebende Metallhülse (5), die fest mit der Ummantelung (3) verbunden und im Bereich der Ausnehmung angeordnet ist, und durch einen radial zwischen der Metallhülse (5) und der Wandung (1) angeordneten Schneidring (10).

2. Kabeldurchführung nach Anspruch 1, dadurch gekennzeichnet, daß der Schneidring (10) innerhalb eines konischen Abschnitts (9) der Ausnehmung vorgesehen ist.

3. Kabeldurchführung nach einem der vorhergehenden Ansprüche, dadurch gekennzeichnet, daß die Metallhülse (5) mittels einer Quetschverbindung (6) mit der Ummantelung (3) verbunden ist.

4. Kabeldurchführung nach einem der vorhergehenden Ansprüche, dadurch gekennzeichnet, daß die Ummantelung (3) in einem innerhalb der Metallhülse (5) liegenden Bereich entfernt ist, und daß dieser Bereich mit einer feuchtigkeitsbeständigen Masse (7) vergossen ist.

5. Kabeldurchführung nach Anspruch 4, dadurch gekennzeichnet, daß die Kabellitzen (8) im vergossenen Bereich einen abisolierten Teilabschnitt aufweisen, innerhalb dessen sie verlötet sind.

6. Kabeldurchführung nach einem der vorhergehenden Ansprüche, dadurch gekennzeichnet, daß dem Schneidring (10) eine Stopfbuchsendichtung vorgelagert ist.

7. Kabeldurchführung nach einem der vorhergehenden Ansprüche, dadurch gekennzeichnet, daß der Schneidring (10) durch eine Spannmutter (12) axial beaufschlagbar ist.

8. Kabeldurchführung nach Anspruch 7, dadurch gekennzeichnet, daß die Spannmutter ein Innengewinde für eine PG-Verschraubung aufweist.

9. Kabeldurchführung nach einem der vorhergehenden Ansprüche, gekennzeichnet durch ihre Verwendung zur Abdichtung eines in ein Sensorgehäuse eingeführten Kabels.
